# FASCICULE DE BREVET EUROPEEN

(11) **EP 3 793 085 B1**
(45) Date de publication et mention de la délivrance du brevet: **12.07.2023**
(21) Numéro de dépôt: 20193489.0
(22) Date de dépôt: 28.08.2020
(51) Int. Cl.: H02S 20/00

(54) **STRUCTURE PHOTOVOLTAÏQUE FLOTTANTE**
SCHWIMMENDE FOTOVOLTAIKSTRUKTUR
FLOATING PHOTOVOLTAIC STRUCTURE

(30) Priorité: 13.09.2019 FR 1910148
(43) Date de publication de la demande: 17.03.2021
(73) Titulaire: Commissariat à l'énergie atomique et aux énergies alternatives, 75015 Paris (FR)
(72) Inventeur: GERRITSEN, Eric, 38054 Grenoble Cedex 09 (FR); LEFILLASTRE, Paul, 38054 Grenoble Cedex 09 (FR); MESSAOUDI, Paul, 38054 Grenoble Cedex 09 (FR)
(74) Mandataire: Brevalex

(56) Documents cités:
- EP-A1- 2 866 268
- EP-A1- 3 118 103
- CN-A- 108 011 580
- DE-A1- 10 302 746

## Description

### DOMAINE TECHNIQUE

La présente invention se rapporte au domaine des modules photovoltaïques, qui comportent un ensemble de cellules photovoltaïques reliées entre elles électriquement, et préférentiellement des cellules photovoltaïques dites « cristallines », c'est-à-dire qui sont à base de silicium monocristallin ou multicristallin.

Plus spécifiquement, l'invention concerne le domaine des modules photovoltaïques utilisés sur des installations flottantes, positionnées sur des étendues d'eau, pour former des centrales solaires flottantes aptes à produire de l'électricité.

L'invention propose ainsi une structure photovoltaïque flottante, ainsi qu'une centrale solaire flottante comporte une pluralité de telles structures photovoltaïques flottantes.

### ÉTAT DE LA TECHNIQUE ANTÉRIEURE

Un module photovoltaïque est un assemblage de cellules photovoltaïques disposées côte à côte entre une première couche transparente formant une face avant du module photovoltaïque et une seconde couche formant une face arrière du module photovoltaïque.

La première couche formant la face avant du module photovoltaïque est avantageusement transparente pour permettre aux cellules photovoltaïques de recevoir un flux lumineux.

La deuxième couche formant la face arrière du module photovoltaïque peut quant à elle être réalisée à base de film polymère ou de matériaux composites de type préimprégnés, à base de renforts de type verre ou autre.

Les cellules photovoltaïques peuvent être reliées électriquement entre elles (interconnectées) par des éléments de contact électrique avant et arrière, appelés conducteurs de liaison, et formés par exemple par des bandes (ou rubans) ou fils de cuivre étamé.

Par ailleurs, les cellules photovoltaïques, situées entre les première et deuxième couches formant respectivement les faces avant et arrière du module photovoltaïque, peuvent être encapsulées. L'encapsulant peut être réalisé à partir d'au moins un matériau polymère choisi parmi : les copolymères d'acides, les ionomères, le poly(éthylène-acétate de vinyle) (EVA), les acétals de vinyle , tels que les polyvinylbutyrals (PVB), les polyuréthanes, les polyéthylènes, tels que les polyéthylènes linéaires basse densité, les polyoléfines élastomères de copolymères, les copolymères d'α-oléfines et des α-, β- esters d'acide carboxylique à éthylénique, tels que les copolymères éthylène-acrylate de méthyle et les copolymères éthylène-acrylate de butyle, les élastomères de silicone et/ou les résines époxy, entre autres.

Ces différentes couches sont mises en oeuvre par un procédé de lamination à chaud, à environ 150°C, sous vide pour l'obtention du module photovoltaïque.

De nos jours, l'utilisation des modules photovoltaïques pour produire de l'électricité à partir de l'énergie solaire est largement répandue.

Depuis quelques années, il est même connu d'utiliser les modules photovoltaïques sur des installations flottantes positionnées sur des étendues d'eau, par exemple des lacs ou des étangs. Le document DE 10302746 A1 décrit une telle installation flottante. A titre d'exemple, la demande internationale WO 2019/122712 A1 décrit un ensemble modulaire de centrale solaire flottante comprenant un support flottant et un panneau photovoltaïque solidarisé à ce support.

Les solutions connues de l'art antérieur repose sur le principe d'ajout de modules photovoltaïques sur des structures déjà prévues pour flotter, indépendamment de leur usage pour le domaine du photovoltaïque.

Ce type de solution génère donc un encombrement et une masse importants, et ne permet pas d'optimiser l'usage des modules photovoltaïques, en particulier dans l'optique d'utiliser des modules photovoltaïques bifaciaux configurés pour permettre de récupérer l'énergie solaire sur leurs deux faces opposées.

Or, l'installation de structures photovoltaïques sur des étendues d'eau est une perspective prometteuse en comparaison aux installations terrestres. Ainsi, par exemple, la présence de modules photovoltaïques sur seulement 1 % de la surface des lacs artificiels mondiaux équivaudrait à générer la puissance mondiale obtenue par les installations photovoltaïques terrestres actuelles.

### EXPOSÉ DE L'INVENTION

L'invention a pour but de remédier au moins partiellement aux besoins mentionnés précédemment et aux inconvénients relatifs aux réalisations de l'art antérieur.

L'invention a ainsi pour objet, selon l'un de ses aspects, une structure photovoltaïque flottante, destinée à être positionnée sur une étendue d'eau, apte à être mobile en rotation autour d'un axe horizontal, comportant :
- un élément flottant formant réflecteur, comprenant :
   - au moins un matériau réfléchissant de la lumière solaire,
   - une paroi creuse, comprenant une surface interne pourvue dudit au moins un matériau réfléchissant, et une surface externe, opposée à la surface interne, destinée à être au contact de l'étendue d'eau, ladite surface interne présentant la forme d'une surface quadratique s'étendant parallèlement à l'axe horizontal, et ladite paroi creuse comprenant une première extrémité et une deuxième extrémité distinctes entre lesquelles ladite paroi creuse s'étend,
- un élément de couverture transparent, s'étendant entre la première extrémité et la deuxième extrémité de ladite paroi creuse de sorte à définir, avec ladite paroi creuse, un volume interne fermé de la structure photovoltaïque flottante,
- au moins un module photovoltaïque bifacial, apte à collecter la lumière solaire sur ses deux faces avant et arrière opposées, positionné relativement à la surface interne de ladite paroi creuse et à l'élément de couverture transparent de telle sorte à recevoir au moins la lumière solaire traversant l'élément de couverture transparent et réfléchie par ledit au moins un matériau réfléchissant sur au moins l'une des faces opposées du module photovoltaïque.

Le terme « transparent » signifie que l'élément de couverture est au moins partiellement transparent à la lumière visible, laissant passer au moins environ 80 % de cette lumière.

De façon avantageuse, la structure photovoltaïque flottante selon l'invention, et notamment l'élément flottant formant réflecteur est étanchéifié et protégé de l'environnement aquatique dans lequel elle est destinée à être positionnée.

Grâce à l'invention, il peut être possible de proposer une structure photovoltaïque autoflottante dans laquelle la fonctionnalité de flottaison est intégrée dans le réflecteur. De cette manière, il peut être possible d'utiliser la face arrière de modules photovoltaïques bifaciaux. Au contraire, dans les solutions de l'art antérieur, les systèmes photovoltaïques sont ajoutés sur des structures flottantes préexistantes.

Par ailleurs, à l'inverse des solutions connues d'applications terrestres pour lesquelles l'intégration de réflecteurs à des modules photovoltaïques bifaciaux génère des modules volumineux non souhaitables, du fait de la distance nécessaire entre réflecteur et face arrière, l'existence d'un tel volume pour une application flottante peut permettre d'obtenir une solution de flottaison recherchée dans le cadre de la présente invention.

La structure photovoltaïque selon l'invention peut en outre comporter l'une ou plusieurs des caractéristiques suivantes prises isolément ou suivant toutes combinaisons techniques possibles.

Selon une première réalisation, ledit au moins un module photovoltaïque peut être positionné dans le volume interne de la structure photovoltaïque flottante de telle sorte que ses deux faces opposées soient en vis-à-vis d'au moins une portion de la surface interne de ladite paroi creuse pour recueillir la lumière solaire réfléchie, ledit au moins un module photovoltaïque s'étendant notamment au contact de et entre la surface interne de ladite paroi creuse et l'élément de couverture transparent.

Dans ce cas, le positionnement dudit au moins un module photovoltaïque dans le volume interne permet d'assurer son étanchéité et sa protection contre l'environnement aquatique et contre les nuisances animales, tels que des oiseaux.

Ledit au moins un module photovoltaïque peut être fixe par rapport à l'élément flottant formant réflecteur et l'élément de couverture transparent.

En variante, ledit au moins un module photovoltaïque peut être apte à être mobile en rotation autour de l'axe horizontal indépendamment de l'élément flottant formant réflecteur et de l'élément de couverture transparent. Autrement dit, ledit au moins un module photovoltaïque peut être mobile par rapport à l'élément flottant formant réflecteur et à l'élément de couverture transparent. Il peut ainsi être possible d'imposer une rotation autour de l'axe horizontal uniquement audit au moins un module photovoltaïque, par exemple pour le faire varier entre des positions correspondant à différents moments de la journée en fonction de la position du soleil, par exemple des positions matin et midi.

Selon une deuxième réalisation, ledit au moins un module photovoltaïque peut être positionné en dehors du volume interne de la structure photovoltaïque flottante de telle sorte à s'étendre à distance et sensiblement parallèlement à l'élément de couverture transparent, la structure photovoltaïque flottante comportant des moyens de fixation, notamment des barres de fixation, dudit au moins un module photovoltaïque à l'élément de couverture transparent.

Avantageusement, le positionnement externe dudit au moins un module photovoltaïque, à distance de l'élément de couverture transparent, permet d'obtenir un refroidissement par convection dudit au moins un module photovoltaïque.

Par ailleurs, ledit au moins un module photovoltaïque peut comprendre une pluralité de modules photovoltaïques bifaciaux s'étendant sous forme de bandes sensiblement parallèles les unes aux autres et espacées entre elles d'une distance prédéterminée, étant notamment espacées régulièrement.

En variante, ledit au moins un module photovoltaïque peut comprendre un module photovoltaïque bifacial semi-transparent, comprenant des zones pourvues de cellules photovoltaïques et des zones transparentes, les zones se présentant notamment sous forme de bandes sensiblement parallèles les unes aux autres et espacées entre elles d'une distance correspondant à la largeur des zones transparentes, étant notamment espacées régulièrement.

En outre, ladite paroi creuse peut comporter un réservoir de ballast contrôlable apte à contenir une quantité d'eau pour la stabilisation et le contrôle de la position de la structure photovoltaïque flottante par rapport au soleil.

Ladite paroi creuse peut encore comporter, sur sa surface externe, au moins un réservoir formant une quille creuse, notamment une pluralité de réservoirs formant une quille creuse régulièrement espacés les uns des autres, apte à contenir une quantité d'eau pour la stabilisation et le contrôle de la position de la structure photovoltaïque flottante par rapport au soleil.

Ladite paroi creuse peut également comporter, sur sa surface externe, au moins un réservoir formant une quille rétractable creuse, apte à passer d'une position dite « déployée » dans laquelle la quille rétractable creuse est remplie d'une quantité d'eau permettant son déploiement à une position dite « rétractée » dans laquelle la quille rétractable creuse est vide permettant son repliement vers la surface externe de ladite paroi creuse, de sorte à permettre la stabilisation et le contrôle de la position de la structure photovoltaïque flottante par rapport au soleil.

En outre, ledit au moins un module photovoltaïque bifacial peut s'étendre au contact de la paroi interne de ladite paroi vers l'élément de couverture transparent, sans contact avec l'élément de couverture transparent, la dimension dudit au moins un module photovoltaïque bifacial, par observation en section par rapport à l'axe horizontal, étant inférieure à la distance entre l'axe horizontal et la paroi interne de ladite paroi, pour permettre un abaissement du centre de gravité de la structure photovoltaïque flottante et une stabilité mécanique.

Par ailleurs, la surface quadratique de ladite surface interne peut être une surface cylindrique ou cylindrique parabolique, présentant respectivement, en section par rapport à l'axe horizontal, une forme circulaire ou parabolique.

La surface quadratique de ladite surface interne peut tout particulièrement être de forme parabolique, en section par rapport à l'axe horizontal, notamment du type de celle d'un réflecteur de type CPC (pour « Compound Parabolic Concentrator » en anglais).

De façon avantageuse, ladite paroi creuse peut se présenter sous une forme tubulaire creuse.

L'utilisation d'une paroi creuse de forme tubulaire quadratique, notamment cylindrique, peut permettre un gain en termes d'aérodynamisme, et en particulier permettre de réduire la sensibilité au vent. De ce fait, la structure photovoltaïque peut être moins sensible aux phénomènes climatiques sévères, tels que des tempêtes ou typhons. Il peut ainsi être possible de mettre en rotation ledit au moins un module photovoltaïque de manière simplifiée pour suivre la course du soleil et donc de réaliser un suivi.

Ladite paroi creuse peut être réalisée en métal, notamment en acier inoxydable, ledit métal formant ledit au moins un matériau réfléchissant.

Ladite paroi creuse peut encore être réalisée en polymère, notamment en polychlorure de vinyle (PVC), et ledit au moins un matériau réfléchissant peut comporter une couche métallique réfléchissante disposée sur la surface interne de ladite paroi creuse.

Par ailleurs, l'élément de couverture transparent peut être réalisé à partir de verre et/ou de polymère, par exemple le polyfluorure de vinylidène (PVDF), l'éthylène tétrafluoroéthylène (ETFE), l'éthylène chlorotrifluoroéthylène (ECTFE), l'éthylène propylène fluoré (FEP), le polyméthacrylate de méthyle (PMMA), le polycarbonate (PC), et/ou un matériau composite de type préimprégné avec des renforts de type verre, entre autres.

L'élément de couverture transparent peut se présenter sous la forme d'une plaque de forme plane ou incurvée, notamment cylindrique, s'étendant parallèlement à l'axe horizontal. En particulier, l'élément de couverture transparent peut se présenter sous la forme d'un cylindre, présentant en section par rapport à l'axe horizontal une forme de demi-cercle. De même, ladite paroi creuse peut se présenter sous la forme d'un cylindre, présentant en section par rapport à l'axe horizontal une forme de demi-cercle. Ainsi, par observation en section par rapport à l'axe horizontal, l'élément de couverture transparent et ladite paroi creuse peuvent former un cercle complet.

Par ailleurs, l'invention a encore pour objet, selon un autre de ses aspects, une centrale solaire flottante, caractérisée en ce qu'elle comporte :
- au moins une structure de flottaison, destinée à être positionnée sur une étendue d'eau,
- une pluralité de structures photovoltaïques flottantes telles que celle définie précédemment,
les structures photovoltaïques flottantes étant montées en rotation autour d'axes horizontaux respectifs, solidarisés à et entraînés en rotation par ladite au moins une structure de flottaison.

Les structures photovoltaïques flottantes peuvent avantageusement s'étendre sensiblement parallèlement les unes par rapport aux autres, selon les axes horizontaux sensiblement parallèles entre eux, et ladite au moins une structure de flottaison peut s'étendre sensiblement perpendiculairement aux structures photovoltaïques flottantes.

En outre, ladite au moins une structure de flottaison peut comporter des moyens motorisés permettant la mise en rotation des structures photovoltaïques flottantes, notamment au moyen de câbles, pour leur donner une orientation en fonction de la position du soleil.

Par ailleurs, la centrale solaire peut comporter au moins une structure de flottaison annulaire, définissant un volume interne à l'intérieur duquel sont positionnés les structures photovoltaïques flottantes, ladite au moins une structure de flottaison annulaire étant mobile en rotation selon un axe vertical perpendiculaire aux axes horizontaux.

### BRÈVE DESCRIPTION DES DESSINS

L'invention pourra être mieux comprise à la lecture de la description détaillée qui va suivre, d'exemples de mise en oeuvre non limitatifs de celle-ci, ainsi qu'à l'examen des figures, schématiques et partielles, du dessin annexé, sur lequel :
[Fig. 1] représente, selon une vue partielle de côté, une première configuration de structure photovoltaïque flottante conforme à l'invention avec présence d'un module photovoltaïque interne,
[Fig. 2] représente, selon une vue partielle de côté, une deuxième configuration de structure photovoltaïque flottante conforme à l'invention avec présence d'un module photovoltaïque externe,
[Fig. 2A] illustre, partiellement selon une vue de dessus, un exemple de réalisation d'un module photovoltaïque pour une structure photovoltaïque flottante conforme à l'invention, par exemple du type de celle représentée sur [Fig. 1] ou [Fig. 2],
[Fig. 2B] illustre, partiellement selon une vue de dessus, un exemple de réalisation d'une pluralité de modules photovoltaïques pour une structure photovoltaïque flottante conforme à l'invention, par exemple du type de celle représentée sur [Fig. 1] ou [Fig. 2],
[Fig. 3] représente, partiellement en vue de dessus, un premier exemple de centrale solaire flottante conforme à l'invention,
[Fig. 4] représente, partiellement en vue de dessus, un deuxième exemple de centrale solaire flottante conforme à l'invention,
[Fig. 5A], [Fig. 5B], [Fig. 5C] et [Fig. 5D] représentent, selon des vues partielles de côté, des exemples d'une première variante de réalisation d'une structure photovoltaïque flottante conforme à l'invention,
[Fig. 6] représente, selon une vue partielle de côté, un exemple d'une deuxième variante de réalisation d'une structure photovoltaïque flottante conforme à l'invention,
[Fig. 7A] et [Fig. 7B] représentent, selon des vues partielles de côté, un exemple d'une troisième variante de réalisation d'une structure photovoltaïque flottante conforme à l'invention, et
[Fig. 8] et [Fig. 9] représentent, selon des vues partielles de côté, des exemples de positionnement de modules photovoltaïques dans structure photovoltaïque flottante conforme à l'invention.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

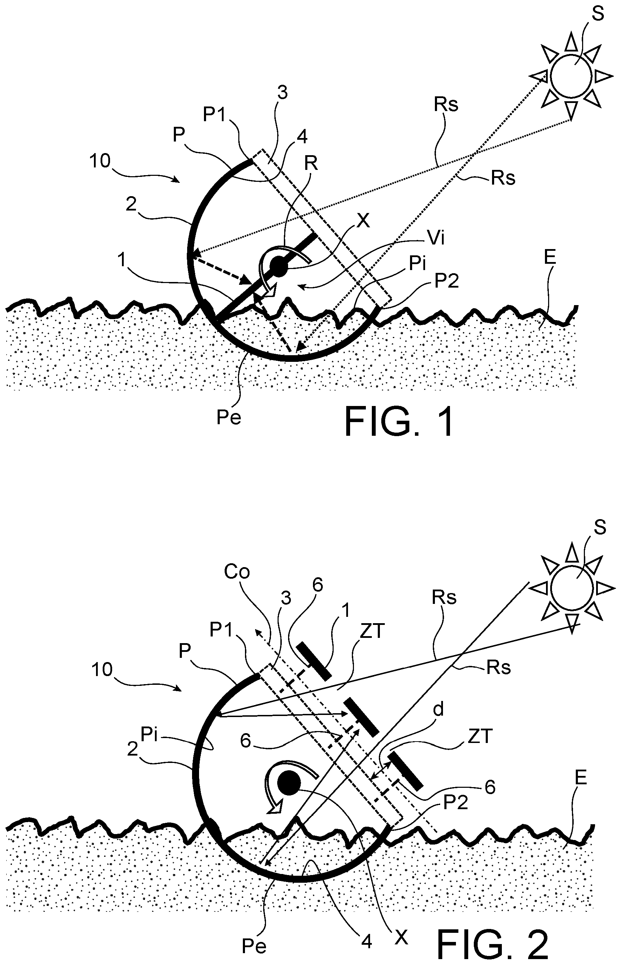

En référence aux figures 1 à 9, on a représenté différentes réalisations possibles pour une structure photovoltaïque flottante 10 et une centrale solaire flottante 20 conformes à l'invention.

Tout d'abord, la figure 1 représente une première configuration de structure photovoltaïque flottante 10 conforme à l'invention avec utilisation d'un module photovoltaïque 1 interne, ce qui permet de le protéger du milieu aquatique environnant et d'assurer son étanchéité.

La structure photovoltaïque flottante 10 est positionnée sur une étendue d'eau E et permet de capter les rayons solaires Rs en fonction de son orientation par rapport à la course du soleil, en particulier entre ses positions à l'ouest et à l'est.

La structure photovoltaïque flottante 10 est mobile en rotation, selon la flèche R représentée à la figure 1, autour d'un axe horizontal X qui peut être piloté par le biais de moyens motorisés présents dans la centrale solaire flottante 20 correspondante.

Ainsi, la structure photovoltaïque flottante 10 comporte tout d'abord un élément flottant formant réflecteur 2, qui se présente avantageusement sous une forme tubulaire creuse. Cet élément flottant 2 est capable d'avoir son orientation modifiée en fonction de la course du soleil afin de traquer la position du soleil par rotation autour de l'axe horizontal X.

L'élément flottant 2 comprend un matériau réfléchissant 4 de la lumière solaire et une paroi creuse P. Cette paroi creuse P comporte une surface interne Pi, sur laquelle figure le matériau réfléchissant 4, et une surface externe Pe opposée qui vient au contact de l'étendue d'eau E.

Par exemple, la paroi creuse P peut être réalisée en métal, notamment en inox, et ce métal forme alors le matériau réfléchissant 4. En variante, la paroi creuse P peut être réalisée en polymère, tout particulièrement en polychlorure de vinyle (PVC), et alors une couche réfléchissante 4, métallique ou encore sous forme de peinture ou autre couche polymère blanche, est disposée sur la surface interne Pi de la paroi creuse P.

Avantageusement, la surface interne Pi, et préférentiellement toute la paroi P, présente la forme d'une surface quadratique s'étendant parallèlement à l'axe horizontal X. Cette forme quadratique est notamment une surface cylindrique ou cylindrique parabolique, présentant respectivement, en section par rapport à l'axe horizontal X, une forme circulaire ou parabolique. Une forme tubulaire creuse avec surface quadratique de la paroi P permet réduire la sensibilité au vent et d'être plus résistante aux phénomènes climatiques sévères. La mise en rotation du module photovoltaïque est simplifiée pour permettre de suivre la course du soleil.

Par ailleurs, la paroi creuse P comprend une première extrémité P1 et une deuxième extrémité P2 distinctes entre lesquelles elle s'étend.

La structure photovoltaïque flottante 10 comporte encore un élément de couverture transparent 3, qui s'étend entre la première extrémité P1 et la deuxième extrémité P2 de la paroi creuse P de sorte à définir, avec cette paroi creuse P, un volume interne Vi fermé de la structure photovoltaïque flottante 10.

Cet élément de couverture transparent 3 peut être réalisé à partir de verre et/ou de polymère, par exemple le polyfluorure de vinylidène (PVDF), l'éthylène tétrafluoroéthylène (ETFE), l'éthylène chlorotrifluoroéthylène (ECTFE), l'éthylène propylène fluoré (FEP), le polyméthacrylate de méthyle (PMMA), le polycarbonate (PC), et/ou un matériau composite de type préimprégné avec des renforts de type verre, entre autres.

Dans cet exemple représenté sur la figure 1, l'élément de couverture transparent 3 se présente sous la forme d'une plaque de forme plane s'étendant parallèlement à l'axe horizontal X. En variante, une telle plaque pourrait aussi être incurvée, notamment cylindrique. Il est par exemple possible d'avoir un élément de couverture transparent 3 sous la forme d'un cylindre, présentant en section par rapport à l'axe horizontal X une forme de demi-cercle. Alors, la paroi creuse P peut aussi se présenter sous la forme d'un cylindre, présentant en section par rapport à l'axe horizontal X une forme de demi-cercle, de sorte que, par observation en section par rapport à l'axe horizontal X, l'élément de couverture transparent 3 et la paroi creuse P forment un cercle complet.

Enfin, la structure photovoltaïque flottante 10 comporte un module photovoltaïque bifacial 1. Un tel module 1 est apte à collecter la lumière solaire sur ses deux faces avant et arrière opposées.

Le module photovoltaïque 1 est positionné relativement à la surface interne Pi de la paroi creuse P et à l'élément de couverture transparent 3 de telle sorte à recevoir la lumière solaire traversant l'élément de couverture transparent 3 et réfléchie par le matériau réfléchissant 4 sur ses deux faces opposées. Avantageusement, il s'étend perpendiculairement à l'élément de couverture transparent 3.

En effet, selon cette première configuration avec module interne, le module photovoltaïque 1 est positionné dans le volume interne Vi de la structure photovoltaïque flottante 10 de telle sorte que ses deux faces opposées soient en vis-à-vis de la surface interne Pi de la paroi creuse P pour recueillir la lumière solaire réfléchie. De plus, le module photovoltaïque 1 est au contact de la surface interne Pi de la paroi creuse P et de l'élément de couverture transparent 3.

Il est à noter que le module photovoltaïque 1 peut être fixe par rapport à l'élément flottant formant réflecteur 2 et l'élément de couverture transparent 3, de sorte que la rotation selon la flèche R de la structure photovoltaïque flottante 10 autour de l'axe horizontal X entraîne la rotation du module photovoltaïque 1.

En variante, le module photovoltaïque 1 peut être mobile en rotation autour de l'axe horizontal X indépendamment de l'élément flottant formant réflecteur 2 et de l'élément de couverture transparent 3. Ainsi, une rotation autour de l'axe horizontal X peut n'être imposée qu'uniquement au module photovoltaïque 1, par exemple pour le faire varier entre des positions correspondant à différents moments de la journée en fonction de la position du soleil, par exemple des positions matin et midi.

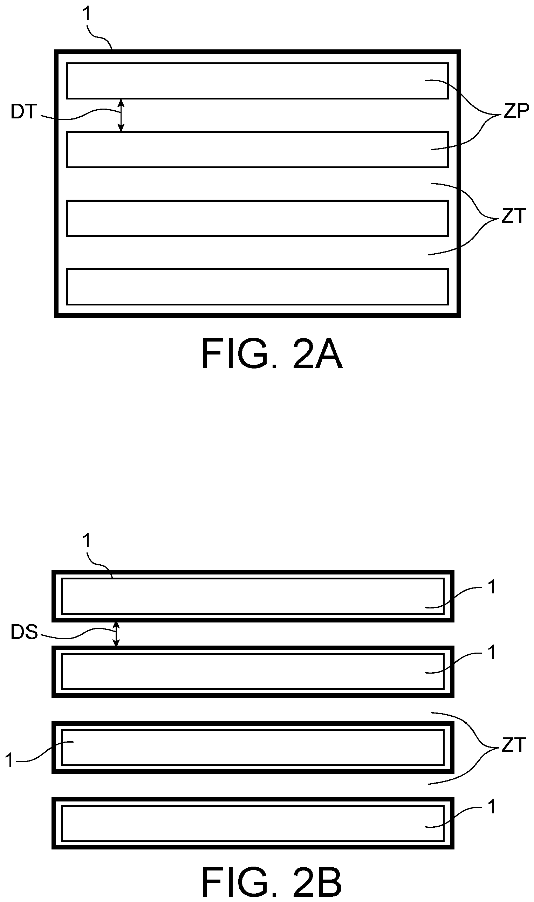

On a maintenant représenté sur la figure 2 une deuxième configuration de structure photovoltaïque flottante 10 avec un module photovoltaïque 1 externe, ce qui permet d'assurer son refroidissement par convection thermique.

Ainsi, comme visible sur cette figure 2, le module photovoltaïque 1 est positionné en dehors du volume interne Vi de la structure photovoltaïque flottante 10.

Ce module photovoltaïque 1 est monté sur l'élément de couverture transparent 3 par le biais de barres de fixation 6 de telle sorte à être situé parallèlement et à une distance d de l'élément de couverture transparent 3.

Ce positionnement externe du module photovoltaïque 1, à distance de l'élément de couverture transparent 3, permet de définir un espace de circulation d'air et d'obtenir un refroidissement par convection, schématisé par la flèche Co sur la figure 2, du module photovoltaïque 1.

Dans ce type de configuration de la figure 2 avec positionnement externe du module photovoltaïque 1, il est souhaitable d'avoir des zones transparentes ZT afin de laisser passer les rayons solaires Rs au travers du module photovoltaïque 1 de sorte à ce qu'ils soient réfléchis par le matériau réfléchissant 4 et puissent atteindre la face arrière du module 1.

Aussi, selon une première possibilité de réalisation illustrée sur la figure 2A, le module photovoltaïque 1 est semi-transparent. Il comprend ainsi des zones ZP pourvues de cellules photovoltaïques et des zones ZT transparentes en alternance. Les zones ZP se présentent sous forme de bandes sensiblement parallèles les unes aux autres et espacées entre elles d'une distance DT correspondant à la largeur des zones ZT transparentes espacées régulièrement.

En variante, selon une deuxième possibilité de réalisation illustrée sur la figure 2B, on peut utiliser une pluralité de modules photovoltaïques bifaciaux 1, ici quatre, qui s'étendent sous forme de bandes sensiblement parallèles les unes aux autres et sont espacées entre elles régulièrement d'une distance DS prédéterminée. Les espaces entre ces bandes formant des modules photovoltaïques bifaciaux 1 forment des zones transparentes ZT laissant passer les rayons solaires Rs.

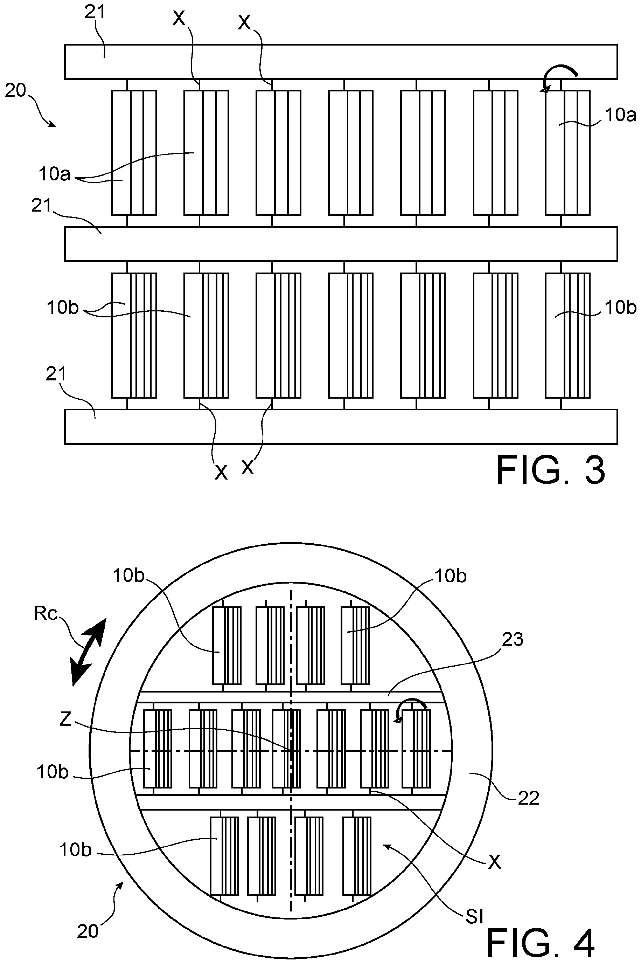

On va maintenant décrire, en référence à la figure 3, un premier exemple de réalisation d'une centrale solaire flottante 20 conforme à l'invention.

Cette centrale solaire flottante 20 comporte trois structures de flottaison 21 qui sont positionnées sur l'étendue d'eau E.

Ces structures de flottaison 21 se présentent sous la forme de bandes ou pontons qui s'étendent perpendiculairement aux structures photovoltaïques flottantes 10 qui elles-mêmes s'étendent parallèlement les unes par rapport aux autres, selon les axes horizontaux de rotation X parallèles entre eux.

Ces structures de flottaison 21 permettent de conférer une stabilité additionnelle, notamment face au vent et/ou aux vagues. Elles permettent également l'installation de moyens motorisés permettant la mise en rotation des structures photovoltaïques flottantes 10 pour leur donner une orientation en fonction de la position du soleil, tout comme l'installation d'autres composants électriques, tels que des onduleurs. Elles permettent aussi de faciliter l'accès en cas de maintenance. Leur taille et leur poids peuvent être minimisés puisque les structures photovoltaïques 10 sont autoflotta ntes.

Sur l'exemple de la figure 3, la centrale solaire flottante 20 comporte par ailleurs une première série (en haut) de structures photovoltaïques flottantes 10a semblables à celle décrite en référence à la figure 1, et une deuxième série (en bas) de structures photovoltaïques flottantes 10b semblables à celle décrite en référence à la figure 2, chacune comportant un module photovoltaïque 1 de type de celui de la figure 2A ou une pluralité de modules photovoltaïques 1 de type de ceux de la figure 2B.

Ces structures photovoltaïques flottantes 10a et 10b sont ainsi toutes montées en rotation autour d'axes horizontaux X respectifs, qui sont solidarisés et entraînés en rotation par les trois structures de flottaison 21 en parallèle.

On a par ailleurs représenté sur la figure 4 un deuxième exemple de réalisation d'une centrale solaire flottante 20 conforme à l'invention.

Dans cet exemple, une pluralité de structures photovoltaïques 10b, semblables à celle décrite en référence à la figure 2, chacune comportant un module photovoltaïque 1 de type de celui de la figure 2A ou une pluralité de modules photovoltaïques 1 de type de ceux de la figure 2B, sont disposées parallèlement les unes aux autres et leurs axes de rotation horizontaux X sont montés dans deux structures de flottaison 22 parallèles, selon une configuration proche de celle de la figure 3.

Cependant, dans cet exemple de la figure 4, une structure de flottaison annulaire 23, définissant un volume interne SI à l'intérieur duquel sont positionnés les structures photovoltaïques flottantes 10b, est solidarisée aux deux structures de flottaison 22 et apte à être entraînée en rotation, selon la double flèche RC sur la figure 4, selon un axe vertical Z perpendiculaire aux axes horizontaux X.

Dans ces conditions, le suivi de la course du soleil peut être effectué selon deux axes, à savoir l'axe vertical Z par le biais de la structure de flottaison annulaire 23 en forme d'anneau et les axes horizontaux X tous parallèles présents sur les structures photovoltaïques flottantes 10.

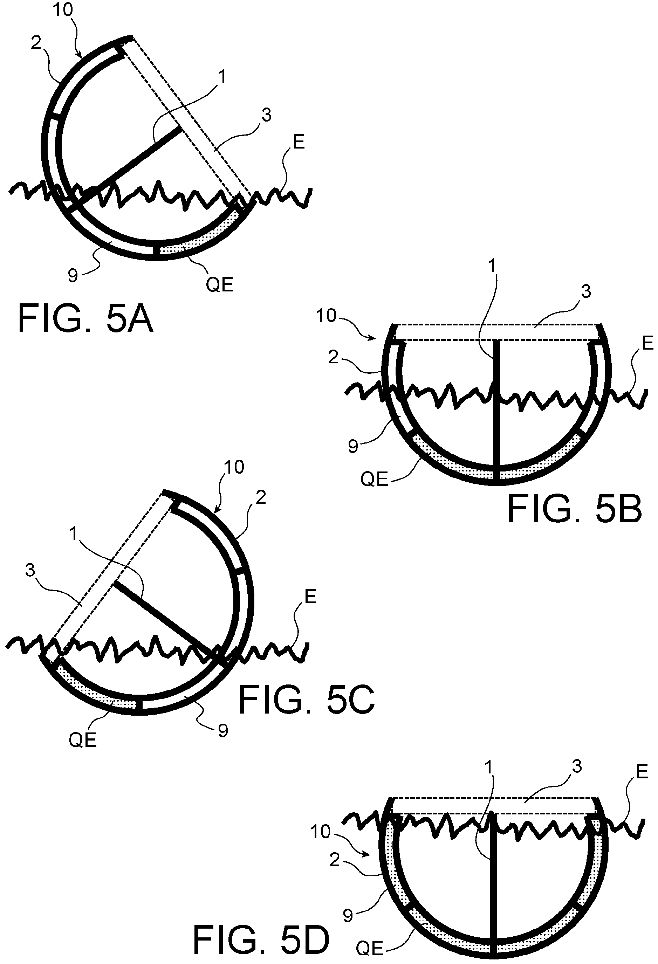

On va désormais décrire les figures 5A à 9 qui présentent des alternatives de réalisation des structures photovoltaïques flottantes 10.

Ainsi, comme illustré aux figures 5A à 5D, la paroi creuse P d'une structure photovoltaïque flottante 10 peut comporter un réservoir de ballast contrôlable 9. Celui-ci est capable de contenir une quantité d'eau QE pour la stabilisation et le contrôle de la position de la structure photovoltaïque flottante 10 par rapport au soleil.

Ainsi, la figure 5A représente par exemple la présence d'une quantité d'eau QE dans le réservoir de ballast 9 de sorte à adopter une position propice à la captation des rayons solaires Rs du matin. Les figures 5B et 5C correspondent quant à elles respectivement à des positions associées à midi et à l'après-midi.

La figure 5D illustre enfin la possibilité d'avoir une quantité d'eau QE dans tout le réservoir de ballast 9 afin d'adopter une position de sécurité, par exemple en cas de conditions climatiques sévères.

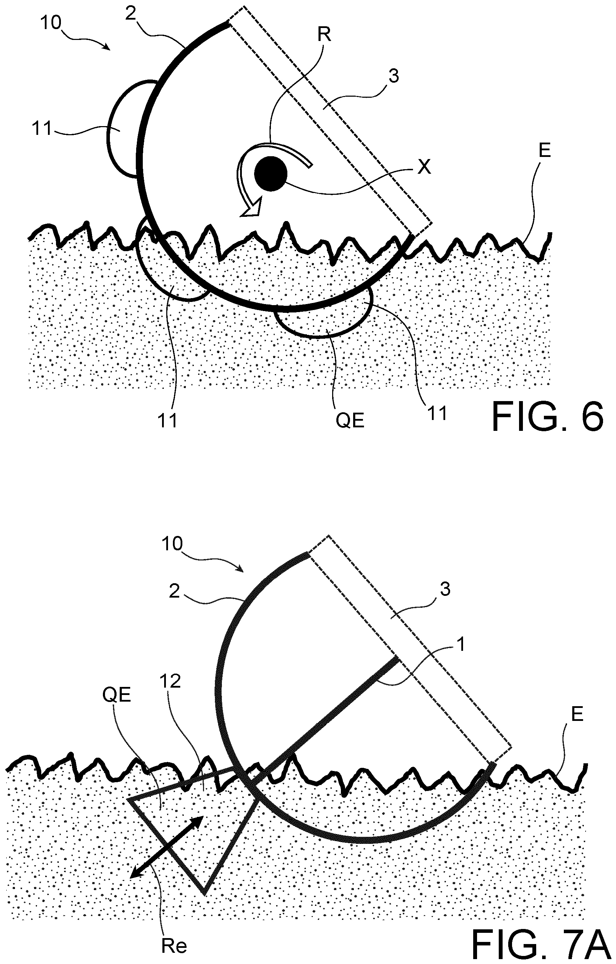

Par ailleurs, la figure 6 illustre la possibilité d'équiper la structure photovoltaïque flottante 10, sur la surface externe Pe de la paroi creuse P, de trois réservoirs 11 formant chacun une quille creuse. Ces trois réservoirs 11 peuvent être régulièrement espacés les uns des autres, et aptes à contenir une quantité d'eau QE pour la stabilisation et le contrôle de la position de la structure photovoltaïque flottante 10 par rapport au soleil.

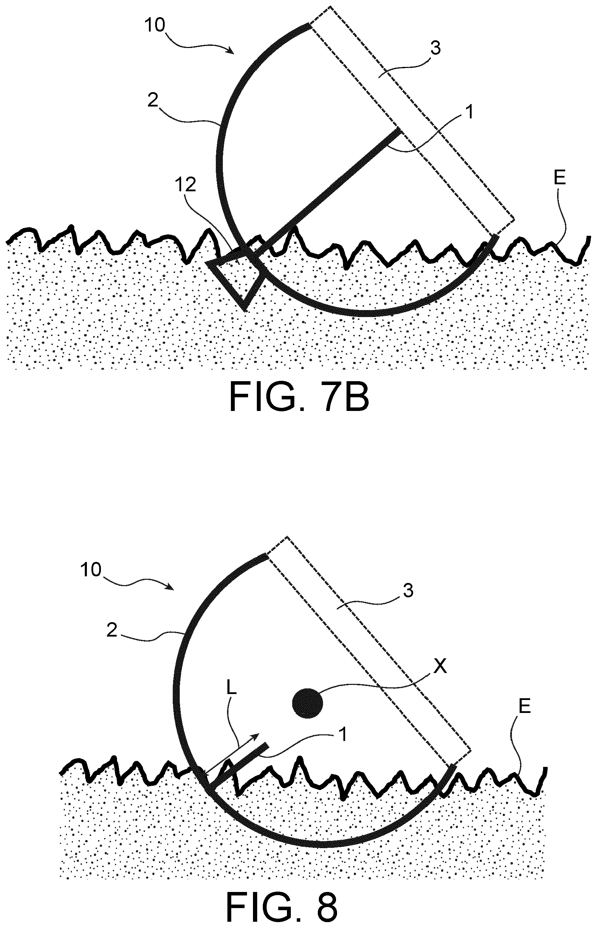

Les figures 7A et 7B illustrent quant à elles la possibilité d'équiper la structure photovoltaïque flottante 10, sur la surface externe Pe de la paroi creuse P, d'un réservoir rétractable 12 formant une quille rétractable creuse. Un tel réservoir 12 peut permettre de passer d'une position dite « déployée », représentée sur la figure 7A, dans laquelle la quille rétractable creuse 12 est remplie d'une quantité d'eau QE permettant son déploiement, à une position dite « rétractée », représentée sur la figure 7B, après retrait selon la flèche Re visible sur la figure 7A, dans laquelle la quille rétractable creuse 12 est vide permettant son repliement vers la surface externe Pe de la paroi creuse P. De cette façon, il est possible d'assurer la stabilisation et le contrôle de la position de la structure photovoltaïque flottante 10 par rapport au soleil.

En outre, afin de pouvoir au besoin abaisser le centre de gravité de la structure photovoltaïque flottante 10 et d'assurer une stabilité mécanique, par exemple face au vent et/ou vagues, il est possible de prévoir la présence du module photovoltaïque 1 de sorte à s'étendre au contact de la paroi interne Pi de la paroi P vers l'élément de couverture transparent 3, sans contact avec l'élément de couverture transparent 3, comme représenté sur la figure 8. Alors, la dimension L du module photovoltaïque bifacial 1, par observation en section par rapport à l'axe horizontal X, est prévue pour être inférieure à la distance entre l'axe horizontal X et la paroi interne Pi de la paroi P.

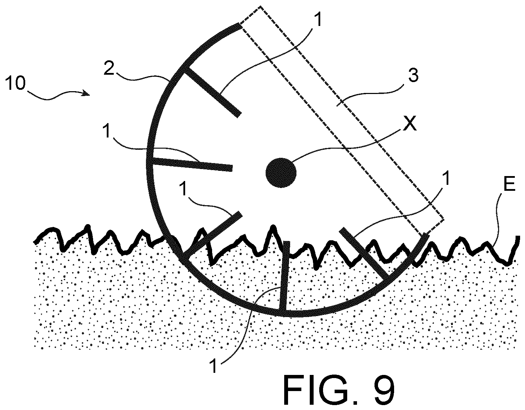

La figure 9 représente la possibilité de procéder comme selon la réalisation de la figure 8 dans le cas d'une pluralité de modules photovoltaïques 1, ici au nombre de cinq.

Bien entendu, l'invention n'est pas limitée aux exemples de réalisation qui viennent d'être décrits. Diverses modifications peuvent y être apportées par l'homme du métier.

## Revendications

1. Structure photovoltaïque flottante (10), destinée à être positionnée sur une étendue d'eau (E), apte à être mobile en rotation autour d'un axe horizontal (X), comportant :
- un élément flottant formant réflecteur (2), comprenant :
- au moins un matériau réfléchissant (4) de la lumière solaire,
- une paroi creuse (P), comprenant une surface interne (Pi) pourvue dudit au moins un matériau réfléchissant (4), et une surface externe (Pe), opposée à la surface interne (Pi), destinée à être au contact de l'étendue d'eau (E), ladite surface interne (Pi) présentant la forme d'une surface quadratique s'étendant parallèlement à l'axe horizontal (X), et ladite paroi creuse (P) comprenant une première extrémité (P1) et une deuxième extrémité (P2) distinctes entre lesquelles ladite paroi creuse (P) s'étend,
- un élément de couverture transparent (3), s'étendant entre la première extrémité (P1) et la deuxième extrémité (P2) de ladite paroi creuse (P) de sorte à définir, avec ladite paroi creuse (P), un volume interne (Vi) fermé de la structure photovoltaïque flottante (10),
- au moins un module photovoltaïque bifacial (1), apte à collecter la lumière solaire sur ses deux faces avant et arrière opposées, positionné relativement à la surface interne (Pi) de ladite paroi creuse (P) et à l'élément de couverture transparent (3) de telle sorte à recevoir au moins la lumière solaire traversant l'élément de couverture transparent (3) et réfléchie par ledit au moins un matériau réfléchissant (4) sur au moins l'une des faces opposées du module photovoltaïque (1).

2. Structure selon la revendication 1, **caractérisée en ce que** ledit au moins un module photovoltaïque (1) est positionné dans le volume interne (Vi) de la structure photovoltaïque flottante (10) de telle sorte que ses deux faces opposées soient en vis-à-vis d'au moins une portion de la surface interne (Pi) de ladite paroi creuse (P) pour recueillir la lumière solaire réfléchie, ledit au moins un module photovoltaïque (1) s'étendant notamment au contact de et entre la surface interne (Pi) de ladite paroi creuse (P) et l'élément de couverture transparent (3).

3. Structure selon la revendication 2, **caractérisée en ce que** ledit au moins un module photovoltaïque (1) est fixe par rapport à l'élément flottant formant réflecteur (2) et l'élément de couverture transparent (3).

4. Structure selon la revendication 2, **caractérisée en ce que** ledit au moins un module photovoltaïque (1) est apte à être mobile en rotation autour de l'axe horizontal (X) indépendamment de l'élément flottant formant réflecteur (2) et de l'élément de couverture transparent (3).

5. Structure selon la revendication 1, **caractérisée en ce que** ledit au moins un module photovoltaïque (1) est positionné en dehors du volume interne (Vi) de la structure photovoltaïque flottante (10) de telle sorte à s'étendre à distance (d) et sensiblement parallèlement à l'élément de couverture transparent (3), la structure photovoltaïque flottante (10) comportant des moyens de fixation (6), notamment des barres de fixation (6), dudit au moins un module photovoltaïque (1) à l'élément de couverture transparent (3).

6. Structure selon la revendication 5, **caractérisée en ce que** ledit au moins un module photovoltaïque (1) comprend une pluralité de modules photovoltaïques bifaciaux (1) s'étendant sous forme de bandes sensiblement parallèles les unes aux autres et espacées entre elles d'une distance (DS) prédéterminée, étant notamment espacées régulièrement.

7. Structure selon la revendication 5, **caractérisée en ce que** ledit au moins un module photovoltaïque (1) comprend un module photovoltaïque bifacial semi-transparent (1), comprenant des zones (ZP) pourvues de cellules photovoltaïques et des zones (ZT) transparentes, les zones (ZP) se présentant notamment sous forme de bandes sensiblement parallèles les unes aux autres et espacées entre elles d'une distance (DT) correspondant à la largeur des zones (ZT) transparentes, étant notamment espacées régulièrement.

8. Structure selon l'une quelconque des revendications précédentes, **caractérisée en ce que** ladite paroi creuse (P) comporte un réservoir de ballast contrôlable (9) apte à contenir une quantité d'eau (QE) pour la stabilisation et le contrôle de la position de la structure photovoltaïque flottante (10) par rapport au soleil.

9. Structure selon l'une quelconque des revendications précédentes, **caractérisée en ce que** ladite paroi creuse (P) comporte, sur sa surface externe (Pe), au moins un réservoir formant une quille creuse (11), notamment une pluralité de réservoirs formant une quille creuse (11) régulièrement espacés les uns des autres, apte à contenir une quantité d'eau (QE) pour la stabilisation et le contrôle de la position de la structure photovoltaïque flottante (10) par rapport au soleil.

10. Structure selon l'une quelconque des revendications précédentes, **caractérisée en ce que** ladite paroi creuse (P) comporte, sur sa surface externe (Pe), au moins un réservoir formant une quille rétractable creuse (12), apte à passer d'une position dite « déployée » dans laquelle la quille rétractable creuse (12) est remplie d'une quantité d'eau (QE) permettant son déploiement à une position dite « rétractée » dans laquelle la quille rétractable creuse (12) est vide permettant son repliement vers la surface externe (Pe) de ladite paroi creuse (P), de sorte à permettre la stabilisation et le contrôle de la position de la structure photovoltaïque flottante (10) par rapport au soleil.

11. Structure selon l'une quelconque des revendications précédentes, **caractérisée en ce que** la surface quadratique de ladite surface interne (Pi) est une surface cylindrique ou cylindrique parabolique, présentant respectivement, en section par rapport à l'axe horizontal (X), une forme circulaire ou parabolique.

12. Centrale solaire flottante (20), **caractérisée en ce qu'**elle comporte :
- au moins une structure de flottaison (21, 22, 23), destinée à être positionnée sur une étendue d'eau (E),
- une pluralité de structures photovoltaïques flottantes (10) selon l'une quelconque des revendications précédentes,
les structures photovoltaïques flottantes (10) étant montées en rotation autour d'axes horizontaux (X) respectifs, solidarisés à et entraînés en rotation par ladite au moins une structure de flottaison (21, 22, 23).

13. Centrale selon la revendication 12, **caractérisée en ce que** les structures photovoltaïques flottantes (10) s'étendent sensiblement parallèlement les unes par rapport aux autres, selon les axes horizontaux (X) sensiblement parallèles entre eux, et **en ce que** ladite au moins une structure de flottaison (21, 22, 23) s'étend sensiblement perpendiculairement aux structures photovoltaïques flottantes (10).

14. Centrale selon la revendication 12 ou 13, **caractérisée en ce que** ladite au moins une structure de flottaison (21, 22, 23) comporte des moyens motorisés permettant la mise en rotation des structures photovoltaïques flottantes (10) pour leur donner une orientation en fonction de la position du soleil.

15. Centrale selon l'une des revendications 12 à 14, **caractérisée en ce qu'**elle comporte au moins une structure de flottaison annulaire (23), définissant un volume interne (SI) à l'intérieur duquel sont positionnés les structures photovoltaïques flottantes (10), ladite au moins une structure de flottaison annulaire (23) étant mobile en rotation (RC) selon un axe vertical (Z) perpendiculaire aux axes horizontaux (X).

## Patentansprüche

1. Schwimmende Photovoltaikstruktur (10), die dazu bestimmt ist, auf einem Gewässer (E) positioniert zu werden, und dazu geeignet ist, um eine horizontale Achse (X) rotierend beweglich zu sein, beinhaltend:
- ein schwimmendes Element, das einen Reflektor (2) bildet, umfassend:
- mindestens ein Material (4), das Sonnenlicht reflektiert,
- eine gebauchte Wandung (P), die eine innere Oberfläche (Pi) umfasst, die mit dem mindestens einen reflektierenden Material (4) ausgestattet ist, und eine der inneren Oberfläche (Pi) gegenüberliegende äußere Oberfläche (Pe), die dazu bestimmt ist, mit dem Gewässer (E) in Kontakt zu sein, wobei die innere Oberfläche (Pi) die Form einer quadratischen Fläche aufweist, die sich parallel zur horizontalen Achse (X) erstreckt, und wobei die gebauchte Wandung (P) ein erstes Ende (P1) und ein separates zweites Ende (P2) umfasst, zwischen denen sich die gebauchte Wandung (P) erstreckt,
- ein transparentes Abdeckelement (3), das sich zwischen dem ersten Ende (P1) und dem zweiten Ende (P2) der gebauchten Wandung (P) erstreckt, um mit der gebauchten Wandung (P) ein abgeschlossenes Innenvolumen (Vi) der schwimmenden Photovoltaikstruktur (10) zu definieren,
- mindestens ein bifaziales Photovoltaikmodul (1), das geeignet ist, Sonnenlicht auf seinen zwei gegenüberliegenden Vorder- und Rückseiten zu sammeln, das relativ zur inneren Oberfläche (Pi) der gebauchten Wandung (P) und dem transparenten Abdeckelement (3) so positioniert ist, dass es mindestens das durch das transparente Abdeckelement (3) hindurchtretende Sonnenlicht aufnimmt, das von dem mindestens einen reflektierenden Material (4) auf mindestens eine der gegenüberliegenden Seiten des Photovoltaikmoduls (1) reflektiert wird.

2. Struktur nach Anspruch 1, **dadurch gekennzeichnet, dass** das mindestens eine Photovoltaikmodul (1) im Innenvolumen (Vi) der schwimmenden Photovoltaikstruktur (10) so positioniert ist, dass seine zwei gegenüberliegenden Seiten gegenüber mindestens einem Teil der innere Oberfläche (Pi) der gebauchten Wandung (P) sind, um das reflektierte Sonnenlicht aufzunehmen, wobei sich das mindestens eine Photovoltaikmodul (1) insbesondere in Kontakt mit und zwischen der inneren Oberfläche (Pi) der gebauchten Wandung (P) und dem transparenten Abdeckelement (3) erstreckt.

3. Struktur nach Anspruch 2, **dadurch gekennzeichnet, dass** das mindestens eine Photovoltaikmodul (1) in Bezug auf das schwimmende Element, das einen Reflektor (2) bildet, und das transparente Abdeckelement (3) ortsfest ist.

4. Struktur nach Anspruch 2, **dadurch gekennzeichnet, dass** das mindestens eine Photovoltaikmodul (1) geeignet ist, um eine horizontale Achse (X) rotierend beweglich zu sein, unabhängig vom schwimmenden Element, das einen Reflektor (2) bildet, und vom transparenten Abdeckelement (3).

5. Struktur nach Anspruch 1, **dadurch gekennzeichnet, dass** das mindestens eine Photovoltaikmodul (1) außerhalb des Innenvolumens (Vi) der schwimmenden Photovoltaikstruktur (10) so positioniert ist, dass es sich in einem Abstand (d) und im Wesentlichen parallel zum transparenten Abdeckelement (3) erstreckt, wobei die schwimmende Photovoltaikstruktur (10) Befestigungsmittel (6) beinhaltet, insbesondere Befestigungsstangen (6), des mindestens einen Photovoltaikmoduls (1) zum transparenten Abdeckelement (3).

6. Struktur nach Anspruch 5, **dadurch gekennzeichnet, dass** das mindestens eine Photovoltaikmodul (1) eine Vielzahl von bifazialen Photovoltaikmodulen (1) umfasst, die sich in Form von Streifen im Wesentlichen parallel zueinander erstrecken und in einem vorbestimmten Abstand (DS) voneinander beabstandet sind, und insbesondere gleichmäßig beabstandet sind.

7. Struktur nach Anspruch 5, **dadurch gekennzeichnet, dass** das mindestens eine Photovoltaikmodul (1) ein halbtransparentes bifaziales Photovoltaikmodul (1) umfasst, das Zonen (ZP) umfasst, die mit Photovoltaikzellen und mit transparenten Zonen (ZT) ausgestattet sind, wobei die Zonen (ZP) insbesondere in Form von Streifen auftreten, die im Wesentlichen parallel zueinander sind, und in einem Abstand (DT) voneinander beabstandet sind, der der Breite der transparenten Zonen (ZT) entspricht, und insbesondere gleichmäßig beabstandet sind.

8. Struktur nach einem der vorhergehenden Ansprüche, **dadurch gekennzeichnet, dass** die gebauchte Wandung (P) einen kontrollierbaren Ballastbehälter (9) beinhaltet, der geeignet ist, eine Wassermenge (QE) aufzunehmen zur Stabilisierung und Kontrolle der Position der schwimmenden Photovoltaikstruktur (10) in Bezug auf die Sonne.

9. Struktur nach einem der vorhergehenden Ansprüche, **dadurch gekennzeichnet, dass** die gebauchte Wandung (P), an ihrer äußeren Oberfläche (Pe), mindestens einen Behälter beinhaltet, der einen hohlen Kiel (11) bildet, insbesondere eine Vielzahl von Behältern, die einen hohlen Kiel (11) bilden, die gleichmäßig voneinander beabstandet sind, und die geeignet sind, eine Wassermenge (QE) aufzunehmen zur Stabilisierung und Kontrolle der Position der schwimmenden Photovoltaikstruktur (10) in Bezug auf die Sonne.

10. Struktur nach einem der vorhergehenden Ansprüche, **dadurch gekennzeichnet, dass** die gebauchte Wandung (P), an ihrer äußeren Oberfläche (Pe), mindestens einen Behälter beinhaltet, der einen einziehbaren hohlen Kiel (12) bildet, der geeignet ist, von einer Position, "ausgefahren" genannt, in der der einziehbare hohle Kiel (12) mit einer Wassermenge (QE) gefüllt ist, die sein Ausfahren ermöglicht, in eine Position, "eingezogen" genannt, zu gelangen, in der der einziehbare hohle Kiel (12) leer ist, um seinen Einzug in die äußeren Oberfläche (Pe) der gebauchten Wandung (P) zu ermöglichen, um die Stabilisierung und Kontrolle der Position der schwimmenden Photovoltaikstruktur (10) in Bezug auf die Sonne zu ermöglichen.

11. Struktur nach einem der vorhergehenden Ansprüche, **dadurch gekennzeichnet, dass** die quadratische Fläche der innere Oberfläche (Pi) eine parabolisch zylindrische oder zylindrische Fläche ist, die im Querschnitt zur horizontalen Achse (X) jeweils eine kreisförmige oder parabolische Form aufweist.

12. Schwimmendes Solarkraftwerk (20), **dadurch gekennzeichnet, dass** es beinhaltet:
- mindestens eine Schwimmstruktur (21, 22, 23), die dazu bestimmt ist, auf einem Gewässer (E) positioniert zu werden,
- eine Vielzahl von schwimmenden Photovoltaikstrukturen (10) nach einem der vorhergehenden Ansprüche,
wobei die schwimmenden Photovoltaikstrukturen (10) um jeweilige horizontale Achsen (X) rotierend montiert sind, die durch die mindestens eine Schwimmstruktur (21, 22, 23) verbunden und in Rotation versetzt werden.

13. Kraftwerk nach Anspruch 12, **dadurch gekennzeichnet, dass** sich die schwimmenden Photovoltaikstrukturen (10) im Wesentlichen parallel zueinander entlang den im Wesentlichen parallelen horizontalen Achsen (X) erstrecken und dass sich die mindestens eine Schwimmstruktur (21, 22, 23) im Wesentlichen perpendikular zu den schwimmenden Photovoltaikstrukturen (10) erstreckt.

14. Kraftwerk nach Anspruch 12 oder 13, **dadurch gekennzeichnet, dass** die mindestens eine Schwimmstruktur (21, 22, 23) motorisierte Mittel beinhaltet, die das Rotieren der schwimmenden Photovoltaikstrukturen (10) ermöglicht, um ihnen eine Ausrichtung entsprechend der Position der Sonne zu verleihen.

15. Kraftwerk nach einem der Ansprüche 12 bis 14, **dadurch gekennzeichnet, dass** es mindestens eine ringförmige Schwimmstruktur (23) beinhaltet, die ein Innenvolumen (SI) definiert, in dem die schwimmenden Photovoltaikstrukturen (10) positioniert sind, wobei die mindestens eine ringförmige Schwimmstruktur (23) entlang einer vertikalen Achse (Z) perpendikular zu den horizontalen Achsen (X) rotierend beweglich (RC) ist.

## Claims

1. Floating photovoltaic structure (10), intended to be positioned on a body of water (E), capable of moving in rotation about a horizontal axis (X), including:
- a floating reflector-forming element (2), comprising:
-- at least one sunlight-reflecting material (4),
-- a hollow wall (P), comprising an inner surface (Pi) provided with said at least one reflective material (4), and an outer surface (Pe), opposite the inner surface (Pi), intended to be in contact with the body of water (E), said inner surface (Pi) having the shape of a quadratic surface extending parallel to the horizontal axis (X), and said hollow wall (P) comprising a first end (P1) and a second end (P2) that are separate from one another, between which said hollow wall (P) extends,
- a transparent cover element (3), extending between the first end (P1) and the second end (P2) of said hollow wall (P) so as to define, together with said hollow wall (P), a closed internal volume (Vi) of the floating photovoltaic structure (10),
- at least one bifacial photovoltaic module (1), capable of collecting sunlight on the two opposite front and rear faces thereof, which module is positioned relative to the inner surface (Pi) of said hollow wall (P) and to the transparent cover element (3) such that it receives at least the sunlight passing through the transparent cover element (3) and reflected by said at least one reflective material (4) on at least one of the opposite faces of the photovoltaic module (1).

2. Structure according to claim 1, **characterised in that** said at least one photovoltaic module (1) is positioned in the internal volume (Vi) of the floating photovoltaic structure (10) such that the two opposite faces thereof are facing at least a portion of the inner surface (Pi) of said hollow wall (P) in order to collect the reflected sunlight, said at least one photovoltaic module (1) extending in particular in contact with and between the inner surface (Pi) of said hollow wall (P) and the transparent cover element (3).

3. Structure according to claim 2, **characterised in that** said at least one photovoltaic module (1) is stationary relative to the floating reflector-forming element (2) and the transparent cover element (3).

4. Structure according to claim 2, **characterised in that** said at least one photovoltaic module (1) is capable of moving in rotation about the horizontal axis (X) independently of the floating reflector-forming element (2) and of the transparent cover element (3).

5. Structure according to claim 1, **characterised in that** said at least one photovoltaic module (1) is positioned outside the internal volume (Vi) of the floating photovoltaic structure (10) so as to extend at a distance (d) from and substantially parallel to the transparent cover element (3), the floating photovoltaic structure (10) including fastening means (6), in particular fastening bars (6), for fastening said at least one photovoltaic module (1) to the transparent cover element (3).

6. Structure according to claim 5, **characterised in that** said at least one photovoltaic module (1) comprises a plurality of bifacial photovoltaic modules (1) extending in the form of strips substantially parallel to one another and spaced apart from one another by a predetermined distance (DS), being in particular evenly spaced apart.

7. Structure according to claim 5, **characterised in that** said at least one photovoltaic module (1) comprises a semi-transparent bifacial photovoltaic module (1), comprising zones (ZP) provided with photovoltaic cells and transparent zones (ZT), the zones (ZP) being in particular in the form of strips which are substantially parallel to one another and spaced apart from one another by a distance (DT) corresponding to the width of the transparent zones (ZT), being in particular evenly spaced apart.

8. Structure according to any one of the preceding claims, **characterised in that** said hollow wall (P) includes a controllable ballast tank (9) capable of containing a quantity of water (QE) for stabilising and controlling the position of the floating photovoltaic structure (10) relative to the sun.

9. Structure according to any one of the preceding claims, **characterised in that** said hollow wall (P) includes, on the outer surface (Pe) thereof, at least one tank forming a hollow keel (11), in particular a plurality of tanks forming a hollow keel (11) evenly spaced apart from one another, capable of containing a quantity of water (QE) for stabilising and controlling the position of the floating photovoltaic structure (10) relative to the sun.

10. Structure according to any one of the preceding claims, **characterised in that** said hollow wall (P) includes, on the outer surface (Pe) thereof, at least one tank forming a retractable hollow keel (12), capable of passing from a so-called "deployed" position wherein the retractable hollow keel (12) is filled with a quantity of water (QE) allowing the deployment thereof, to a so-called "retracted" position wherein the retractable hollow keel (12) is empty allowing it to be folded back towards the outer surface (Pe) of said hollow wall (P), so as to stabilise and control the position of the floating photovoltaic structure (10) relative to the sun.

11. Structure according to any one of the preceding claims, **characterised in that** the quadratic surface of said inner surface (Pi) is a cylindrical or parabolic cylindrical surface, respectively having, from a sectional view relative to the horizontal axis (X), a circular or parabolic shape.

12. Floating solar power station (20), **characterised in that** it includes:
- at least one flotation structure (21, 22, 23), intended to be positioned on a body of water (E),
- a plurality of floating photovoltaic structures (10) according to any one of the preceding claims,
the floating photovoltaic structures (10) being mounted such that they rotate about respective horizontal axes (X), rigidly connected to and caused to rotate by said at least one flotation structure (21, 22, 23).

13. Power station according to claim 12, **characterised in that** the floating photovoltaic structures (10) extend substantially parallel to one another, along horizontal axes (X) that are substantially parallel to one another, and **in that** said at least one flotation structure (21, 22, 23) extends substantially perpendicular to the floating photovoltaic structures (10).

14. Power station according to claim 12 or 13, **characterised in that** said at least one flotation structure (21, 22, 23) includes motorised means allowing the floating photovoltaic structures (10) to be rotated to give them an orientation according to the position of the sun.

15. Power station according to one of claims 12 to 14, **characterised in that** it includes at least one annular flotation structure (23), defining an internal volume (SI) inside which the floating photovoltaic structures (10) are positioned, said at least one annular flotation structure (23) being capable of moving in rotation (RC) about a vertical axis (Z) perpendicular to the horizontal axes (X).
